# EUROPEAN PATENT APPLICATION

(11) **EP 4 408 043 A1**
(43) Date of publication of application: **31.07.2024**
(21) Application number: 23153956.0
(22) Date of filing: 30.01.2023
(51) Int. Cl.: H04W 4/90, H04W 12/02

(54) **METHOD FOR TRANSMITTING DATA DURING AN EMERGENCY CALL AND VEHICLE SUITABLE FOR IMPLEMENTING SUCH A METHOD**

(71) Applicant: Valeo Telematik Und Akustik GmbH, 61381 Friedrichsdorf (DE)
(72) Inventor: ANSLINGER, Lukas, 94000 Créteil (FR); WIPPICH, Frank, 94000 Créteil (FR); KLOSE, Michael, 94000 Créteil (FR); LEJAY, Frédéric, 94000 Créteil (FR); BÜRNER, Martin, 94000 Créteil (FR); KLAEHN, Thomas, 94000 Créteil (FR)
(74) Representative: Delplanque, Arnaud

(57) **Abstract**

The invention relates to a method for transmitting data during an emergency call from a vehicle in which there is at least one occupant (20), comprising the following steps:
- receiving data to be transmitted by means of an in-vehicle processing system, and
- transmitting said data to a remote device via a wireless telecommunications network.

According to the invention, said method comprises, before the transmitting step, a step of processing said data in order to remove at least one personal datum relating to said occupant.

## Description

### TECHNICAL FIELD OF THE INVENTION

The present invention generally relates to the field of emergency call (also named e-call).

It more particularly relates to a method for transmitting data during an emergency call from a vehicle in which there is at least one occupant to a remote call center. This method comprises the following steps:
- receiving data to be transmitted, by means of an in-vehicle processing system, and
- transmitting said data to a remote center via a wireless telecommunications network.

### BACKGROUND INFORMATION AND PRIOR ART

It is well-known to equip a motor vehicle with an automatic emergency call system making it possible to call a remote emergency call center to inform it of an accident.

This emergency call can be automatically triggered, without human intervention, when a collision is detected. It can also be triggered manually by a passenger of the vehicle, thanks to a red button or a 'SOS' button.

During this emergency call, data relative to the vehicle can be transmitted to the emergency call center. For instance, geographical coordinates delivered by a GNSS location system can be sent to this center.

But other data can also be transmitted. The kind of data to be transmitted is however limited. Personal data are indeed not transmitted if data protection and privacy rules require not to do it.

The major drawback of the current situation is that in some countries, it is not possible for the remote call center to obtain all the information required to have a good situation awareness.

### SUMMARY OF THE INVENTION

In this context, the present invention provides a solution respecting the data protection and privacy rules and enabling to send vital information that can not be gathered via audio.

More precisely, the invention relates to a method as described in the introduction, comprising, before the transmitting step, a step of processing said data in order to remove at least one personal datum relating to said occupant. Preferentially, all the personal data are removed.

In other words, the invention consists in acquiring all the useful information and to process them in order to remove only the part that cannot be transmitted considering the personal data protection law.

For instance, in a preferred embodiment, the method comprises a step of capturing at least one image of the interior of the vehicle by means of an in-vehicle image capturing device, and the processing step includes the processing of the image so as to conceal at least a part of a face of the occupant before transmitting it.

In other words, thanks to the invention, it is possible to provide the remote call center with an image of the situation in the vehicle, in which the part(s) of the image that do(es) not respect the data protection and privacy rules is/are hidden (removed, blurred, covered, pixelated...).

Thanks to this image, the emergency call center will be more aware of the situation in the car and will react more accurately.

Other preferred features of the invention are the following ones:
- before the processing step, the processing system determines whether a consent of the occupant relating to the sending of personal data to the remote center is recorded or not in a memory, and the processing step is performed only if no consent is recorded.
- before the processing step, the processing system tries to identify said occupant and determines if the consent of the occupant is recorded only if said occupant is identified.
- before the processing step, the processing system determines whether said vehicle is located in a state where an occupant's consent is mandatory to send personal data to the remote center, and the processing step is performed only if a occupant's consent is mandatory.
- said data to be transmitted include a number of occupants in the vehicle.
- said data to be transmitted include a position of said occupant in the vehicle and/or an age evaluation of said occupant.
- said data to be transmitted include an information relating to the presence or absence of a child seat in the vehicle (for instance the number of child/baby seat in the vehicle).
- said data to be transmitted include an occupant's health information, for example a data relative to the closed or open state of the occupant's eyelids.
- said data to be transmitted include a geolocation data of the vehicle.
- said data to be transmitted include an information relative to a presence or absence of fire and/or smoke in the vehicle.
- said data to be transmitted comprise at least one information determined by means of a remote sensor, for instance a RADAR sensor.
- said data to be transmitted comprise a motion information indicating whether said occupant has made a movement over a predetermined time period or not.

The invention applies to a vehicle comprising a processing system suitable for receiving and processing data and for communicating with a remote center via a wireless telecommunications network, said processing system being programmed to implement the above-mentioned method.

### DETAILED DESCRIPTION OF EXAMPLE(S)

The following description with reference to the accompanying drawings, given by way of non-limiting example makes it clear what the invention consists in and how it can be reduced to practice.

In the accompanying drawings:
- Figure 1 is a schematic view of a vehicle having means suitable for performing a process according to the invention;
- Figure 2 is a schematic view of an electrical network of the vehicle of figure 1;
- Figure 3 is an example of a processed image of the interior of the vehicle of figure 1;
- Figure 4 is a flowchart of the process of the invention performed by the vehicle of figure 1.

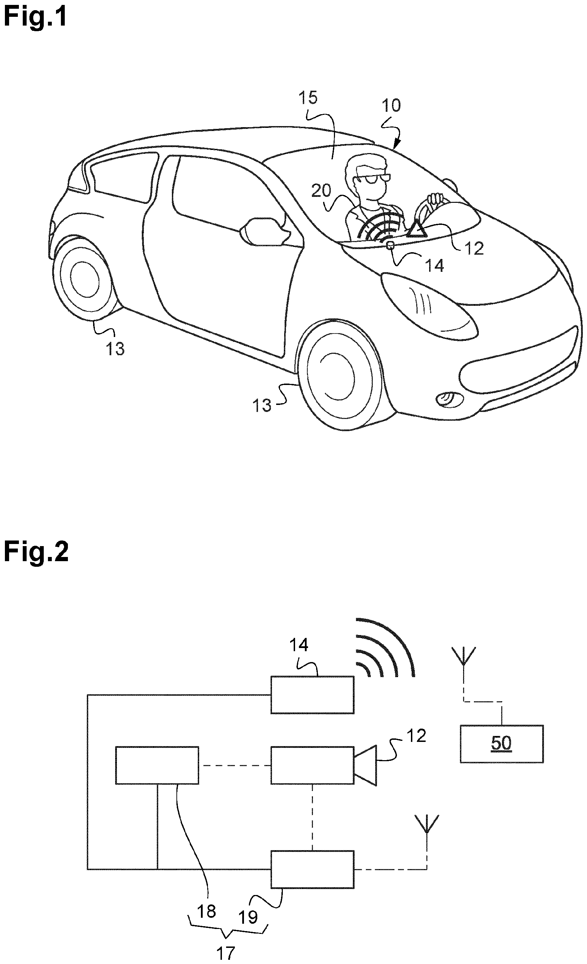

We have shown in Figure 1 a motor vehicle 10. In the illustrated embodiment, it is a car comprising four wheels 13, but as a variant, it could be a vehicle of any other type (truck, bus, etc).

This vehicle 10 comprises a chassis, bodywork elements and glazing panels which delimit together a passenger compartment 15. At least one seat for at least one occupant 20 is fastened to the chassis. In practice, the vehicle 10 comprises several seats so that several occupants 20 can seat in the vehicle 10.

It will be noted here that the term "occupant" will be used to indicate both the driver and any other passenger of the vehicle.

In the context of the present invention, the vehicle 10 comprises at least one image capturing sensor, here a camera 12, making it possible to acquire an image of the interior of the vehicle, that is to say of the passenger compartment 15 and of the occupant(s).

This camera 12 is preferably adapted to acquire these images regardless of the level of ambient light, using either an infrared mode or diodes adapted to emit a luminous flux in the direction of the occupants.

This camera 12 is located at the front of the passenger compartment 15 and directed toward the rear of the vehicle, so that it is adapted to acquire images of the faces of the occupants 20 when they are facing the front of the vehicle. Here, a single camera 12 is used, but alternatively, the vehicle 10 could include several cameras 12.

In a preferred embodiment of the invention, the vehicle 10 also comprises remote sensing means facing the interior of the passenger compartment, typically an interior RADAR 14. This interior RADAR 14 is located into the passenger compartment 15 so as to be able to detect each occupant of the vehicle 10. Here, it is located at the front of the passenger compartment 15 but in a variant, it could be placed in a different location.

As shown in Figure 2, this vehicle 10 also includes an electronic processing system 17 suitable to process the data measured by the camera 12 and, if any, by the interior RADAR 14.

Here, this electronic processing system 17 comprises a processing unit 18 suitable to process the images capture by the camera 12, and a communication unit 19.

The processing unit 18 comprises a processor and a memory. This memory stores data used in the context of the method described below, and in particular a computer application, consisting of computer programs comprising instructions the execution of which allows the implementation by the processing unit 18 of the process described below.

The communication unit 19 is suitable for exchanging data with a remote call center 50 that is distant from the vehicle 10, via a wireless telecommunications network. To this end, both this communication unit 19 and the remote call center 50 have an antenna. The wireless telecommunications network implements a communication technology including 2G, 3G, 4G, and 5G or any other usable technology.

As shown in FIG. 2, the communication unit 19, the processing unit 18 and the interior RADAR 14 are here adapted to communicate together via a CAN-type network of the vehicle 10 (shown in solid lines). The camera 12 is also adapted to communicate with the processing unit 18 and/or with the communication unit 19 via a separate network, here of the LVDS type (shown in dotted lines).

The vehicle 10 comprises an emergency call system that uses the aforementioned equipment of the vehicle. This emergency call system also comprises an accident determination unit, that comprises for instance an accelerometer and means for determining if the measured acceleration exceeds a predetermined threshold. It also comprises a button by means of which an occupant can initiate a communication with the remote call center 50.

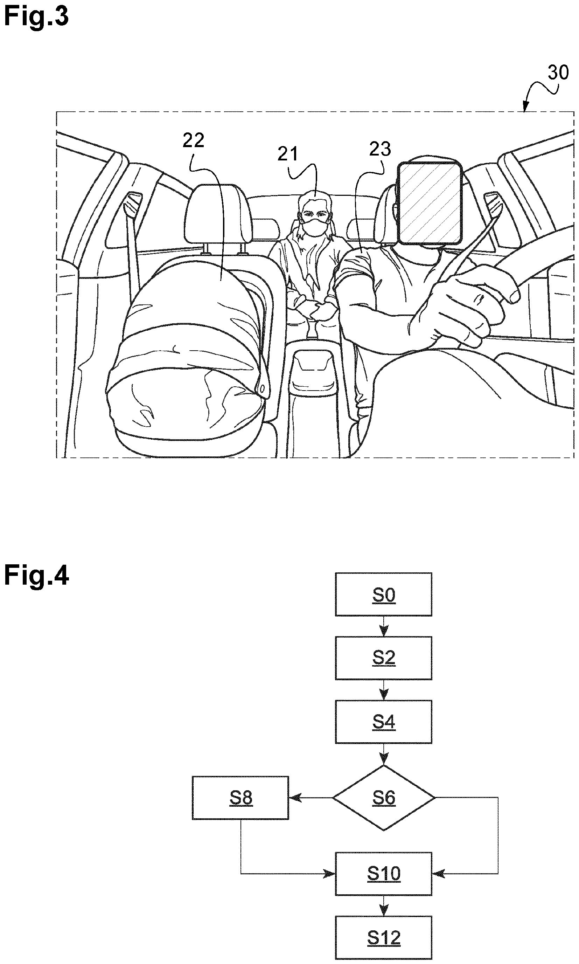

The process performed by the electronic processing system 17 is represented in Figure 4 and comprises several steps.

During a first step S0, an emergency call is automatically triggered, without human intervention, if a collision is detected by means of the accelerator sensor.

After the call is established between the electronic processing system 17 and the remote call center 50, if no occupant respond to an employee of the call center, the latter requests the transmission of data suitable to help this center to determine the location of the accident and to evaluate the consequences of this accident.

To this end, a standardized minimum accident information (e.g., a minimum set of data (MSD) can be sent to remote call center 50. Thanks to this information, the remote call center 50 can dispatch an ambulance or a fire engine to the scene of the accident in association with emergency rescue agencies.

Here, we can note that the "NG eCall" is a European standard that defines a vehicle accident information transmission protocol between a vehicle and a call center. In detail, this standard imposes to use signal information of Session Initiation Protocol (SIP) and media information of Session Description Protocol (SDP) and has been standardized as IETF RFC 8147. In the following, the process will be considered to respect this protocol.

Here, the data to be sent to the remote call center 50 comprises the geolocation of the vehicle 10. This geolocation is obtained for instance by a GNSS geolocation system connected to the CAN network of the vehicle. In a variant, it can be obtained by searching in a cartography the link-ID of the road where the accident took place.

The required data also comprise an image of the interior of the vehicle 10.

Consequently, during a second step S2, the camera 12 is driven to capture at least one image 30 of the occupant(s) 20 of the vehicle 10.

Such an image is shown in Figure 3. In this figure, the image clearly shows two occupants, the driver 23 and a passenger 21. It is also possible to deduce from the image that there is probably a third occupant in the vehicle 10, here a baby in a baby seat 22 located beside the driver.

In a variant, the camera 12 may capture several images, for instance in the form of a video sequence.

At this step S2, the interior RADAR 14 is also controlled so as to detect each occupant of the vehicle 10.

The fusion of the data issued from the camera 12 and the interior RADAR 14 is preferably performed, to accurately detect all the occupants 20 (more precisely the number of occupants that are detected and the number of baby seats).

During the following steps, the data are processed. Here, they are processed by the processing unit 18 but in a variant, they may be processed by the communication unit 19.

To this end, the processing unit 18 receives the captured image 30 and the RADAR data.

According to the invention, the image 30 is intended to be transmitted to the remote call center 50 in a raw form or in a processed form as a function of data protection and privacy rules.

To determine if the image 30 has to be processed, during a third step S4, the processing unit 18 determines the number of occupants in the vehicle. To do so, it can apply to the captured image 30 and the RADAR data a well-known method, involving for instance a neural network.

Then, it tries to identify each occupant in the vehicle. This identification is preferably performed on the basis of the acquired image 30 but in a variant, it could be performed by another method (for instance by vocal recognition). Here, we can specify that this identification can be performed after the triggering of the emergency call, or before it.

Then, during a fourth step S6, the processing unit 18 determines if each occupant 20 has recorded in the memory of this processing unit 18 a consent according to which he authorizes the sending of personal data to the remote call center 50.

This consent is memorized in the memory before the triggering of the emergency call, for instance during an enrolment of the occupant 20. This enrollment consists for instance, when the occupant enters for the first time in the vehicle, in capturing photos of this occupant (so that the processing unit can identify latter this occupant) and in asking for him whether he authorizes the sending of personal data to the remote call center 50 or not. The identification data and the consent are then memorized together in the memory of the processing unit 18 (or in another memory that is accessible through the CAN network).

Then, the processing unit 18 is able to deduce if the image has to be processed or not before being sent to the remote call center 50.

Indeed, if all the occupants have registered a consent, the image is not processed. But if at least one of them has not register it, the image is processed during a fifth step S8 in order to dissimulate the face of each occupant who has not register this consent.

During this step S8, the dissimulation consists in making the face of the occupant not recognizable in the image 30. In practice, this dissimulation can consist in pixelating or blurring the part of the image corresponding to the face of the occupant. In the variant shown in Figure 3, the dissimulation consists in erasing the face of the occupant from the image.

The concealed part of the image may correspond to the exact shape of the face of the occupant or can be a little bit larger or can hide for instance only an upper part of the face (including the eyes). Preferably, only the exact shape of the face of the occupant or a smaller part of the image is concealed. The aim is indeed that the image clearly shows the situation in the car. To this end, the arms and the body trunk of each occupant is neither hidden nor blurred.

In a variant, before blurring the face of the occupant, the processing unit may determine if the vehicle 10 is located in a state where an occupant's consent is mandatory to send personal data to the remote call center 50. In this variant, the fifth step S8 will be implemented only if the vehicle 10 is located in such a state.

Then, in a preferred embodiment of the invention, during a sixth step S10, the processing unit 18 acquires other data to be transmitted to the remote call center 50 together with the exact location of the vehicle and the image 30.

One of these data is the number of occupants 20 in the vehicle (including the baby hidden by his baby seat). This information is indeed important to help the call center to determine the size of the rescue team to be sent.

To this same aim, another datum is the position of the occupants 20 in the vehicle 10 and/or an age evaluation of these occupants 20. The position of the occupant gives an information about their ages. But the age evaluation can be performed otherwise, for instance by determining the height of them and their gender, on the basis of the acquired image. In a variant, if the occupant is identified, his age can be registered in the memory of the processing unit.

One other of the data to be sent is a health evaluation of each occupant. This evaluation is for instance performed by determining on the image if the occupant's eyelids are open or closed. In a preferred variant, this evaluation is made on a sequence video or in at least two distinct images successively acquired. In another variant, this evaluation can be performed by controlling whether the occupants have moved in the vehicle or not during a predetermined period (for instance during the last seconds), thanks to the data issued from the RADAR sensor 14 or/and from the video sequence.

Here, a last data to be sent is an information relative to a presence or absence of fire or smoke in the vehicle. This data can be determined on the basis of the acquired image 30. In a variant, it can be determined otherwise, for instance thanks to a smoke sensor or a temperature sensor.

Alternatively, more (or less) data could be determined.

For instance, the transmitted data may comprise the vehicle type, the vehicle licence plate number, the accident occurrence time, the vehicle azimuth, the vehicle receiving phone number, vehicle fuel information...

During a last step, all the data (including the raw or processed image 30) are transmitted to the remote call center 50 via the wireless telecommunications network.

The present invention is in no way limited to the embodiment described and shown.

The above-described embodiment indeed relates to the processing of an acquired image so as to remove, if necessary, a portion of the image showing the face of the occupant.

But in a variant or in addition, the processing step may consist in removing personal data from the data the be transmitted to the remote call center. For example, if the occupant is identified, only some information relating to his identification are transmitted to the remote call center (unless the occupant has recorded his consent). For instance, his age and his first name can be transmitted but his family name can be removed.

## Claims

1. Method for transmitting data during an emergency call from a vehicle (10) in which there is at least one occupant (20), comprising the following steps:
- receiving data to be transmitted, by means of an in-vehicle processing system (17), and
- transmitting said data to a remote center (50) via a wireless telecommunications network,
**characterized in that** the method comprises, before the transmitting step, a step of processing said data in order to remove at least one personal datum relating to said occupant (20).

2. Method for transmitting data according to claim 1, wherein before the processing step, the processing system (17) determines whether a consent of the occupant (20) relating to the sending of personal data to the remote center (50) is recorded or not in a memory, and the processing step is performed only if no consent is recorded.

3. Method for transmitting data according to claim 2, wherein before the processing step, the processing system (17) tries to identify said occupant (20) and determines if the consent of the occupant (20) is recorded only if said occupant (20) is identified.

4. Method for transmitting data according to any one of claims 1 to 3, wherein before the processing step, the processing system (17) determines whether said vehicle (10) is located in a state where an occupant's consent is mandatory to send personal data to the remote center (50), and the processing step is performed only if a occupant's consent is mandatory.

5. Method for transmitting data according to any one of claims 1 to 4, comprising a step of capturing at least one image (30) of the interior of the vehicle (10) by means of an in-vehicle image capturing device (12), said processing step including the processing of the image (30) so as to conceal at least a part of a face of the occupant (20), said data to be transmitted including said processed image (30).

6. Method for transmitting data according to any one of claims 1 to 5, wherein said data to be transmitted include a number of occupants (20) in the vehicle.

7. Method for transmitting data according to any one of claims 1 to 6, wherein said data to be transmitted include a position of said occupant (20) in the vehicle (10) and/or an age evaluation of said occupant (20).

8. Method for transmitting data according to any one of claims 1 to 7, wherein said data to be transmitted include an information relating to the presence or absence of a child seat in the vehicle.

9. Method for transmitting data according to any one of claims 1 to 8, wherein said data to be transmitted include an occupant's health information, for example a data relative to the closed or open state of the occupant's eyelids.

10. Method for transmitting data according to any one of claims 1 to 9, wherein said data to be transmitted include a geolocation data of the vehicle (10).

11. Method for transmitting data according to any one of claims 1 to 10, wherein said data to be transmitted include an information relative to a presence or absence of fire and/or smoke in the vehicle (10).

12. Method for transmitting data according to any one of claims 1 to 11, wherein said data to be transmitted comprise at least one information determined by means of a remote sensor, for instance a RADAR sensor (14).

13. Method for transmitting data according to any one of claims 1 to 12, wherein said data to be transmitted comprise a motion information indicating whether said occupant (20) has made a movement over a predetermined time period or not.

14. Vehicle (10) comprising a processing system (17) suitable for receiving and processing data, and for communicating with a remote center (50) via a wireless telecommunications network, **characterized in that** said processing system (17) is programmed to implement a method accordance to any one of claims 1 to 13.
